Europäisches Patentamt

European Patent Office

Office européen des brevets

(11) Veröffentlichungsnummer: **0 428 912 A2**

(12) **EUROPÄISCHE PATENTANMELDUNG**

(21) Anmeldenummer: 90120757.1

(22) Anmeldetag: **30.10.90**

(51) Int. Cl.5: **C01B 25/30**

(30) Priorität: **17.11.89 DE 3938225**

(43) Veröffentlichungstag der Anmeldung:
**29.05.91 Patentblatt 91/22**

(84) Benannte Vertragsstaaten:
**DE NL**

(71) Anmelder: **HOECHST AKTIENGESELLSCHAFT**
**Postfach 80 03 20**
**W-6230 Frankfurt am Main 80(DE)**

(72) Erfinder: **Gerhardt, Wilfried, Dr.**
**Am Wachberg 36**
**W-5042 Erftstadt(DE)**
Erfinder: **Schrödter, Klaus, Dr.**
**Baadenberger Strasse 18**
**W-5000 Köln(DE)**

(54) **Verfahren zur Herstellung gereinigter Alkaliphosphatlösung.**

(57) Beim Verfahren zur Herstellung gereinigter Alkaliphosphatlösung aus Naßphosphorsäure dosiert man die Naßphosphorsäure bei erhöhter Temperatur in eine mit Alkalilauge beaufschlagte Mischzone und hält in dieser Mischzone stets ein $Me_2O : P_2O_5$-Verhältnis von größer als 1,9 : 1 ein.

EP 0 428 912 A2

# VERFAHREN ZUR HERSTELLUNG GEREINIGTER ALKALIPHOSPHATLÖSUNG

Die vorliegende Erfindung betrifft ein Verfahren zur Herstellung gereinigter Alkaliphosphatlösung aus Naßphosphorsäure.

Bei der Neutralisationsreinigung von Naßphosphorsäure zur Herstellung von Alkaliphosphatlösung werden die gelösten Metallionen durch Alkalizugabe ausgefällt, Chemische Technologie, Winnacker - Weingaertner, Band II, (1950), Seiten 117 bis 119.

In diesem Niederschlag verbleiben zwischen 10 und 20 Gew% 20 des in der Naßsäure enthaltenen $P_2O_5$.

Zur Steigerung der Wirtschaftlichkeit der Neutralisationsreinigung von Naßphosphorsäure wurde deshalb in der DE-A-20 35 505 vorgeschlagen, diesen Niederschlag mit Alkalilauge zu behandeln und das hierbei gebildete Alkaliphosphat durch Abkühlung als kristallisiertes Trialkaliphosphat-Alkalifluorid-Doppelsalz zu gewinnen. Dieses Doppelsalz kann in den Phosphataufschluß rückgeführt werden, wodurch eine höhere $P_2O_5$-Ausbeute bei der Neutralisationsreinigung von Naßphosphorsäure erreicht wird.

Nachteilig bei diesem Verfahren ist das Betreiben einer zusätzlichen Aufbereitung des Niederschlages, die Rückführung des auskristallisierten Doppelsalzes in die Naßphosphorsäurereinigung und die Kreislaufführung von Fluorid mit dem Doppelsalz.

Es war daher die Aufgabe gestellt, die $P_2O_5$-Ausbeute bei der Neutralisationsreinigung von Naßphosphorsäure ohne zusätzlichen Aufwand zu erhöhen.

Es wurde nun ein einfaches Verfahren zur Herstellung gereinigter Alkaliphosphatlösung gefunden, welches dadurch gekennzeichnet ist, daß man die Naßphosphorsäure bei erhöhter Temperatur in eine mit Alkalilauge beaufschlagte Mischzone dosiert und in dieser Mischzone stets ein $Me_2O : P_2O_5$-Verhältnis von größer als 1,9 : 1 einhält.

Das erfindungsgemäße Verfahren kann weiterhin wahlweise auch noch dadurch ausgestaltet sein, daß

a) die Temperatur in der Mischzone 60°C bis 130°C, insbesondere 95°C bis 105°C, beträgt;

b) man die Mischzone vor dem Naßphosphorsäurezusatz auf 60°C bis 130°C vorheizt;

c) man als Alkalilauge eine 40 bis 50 %ige Natronlauge einsetzt;

d) man die Mischzone unter einem Überdruck von bis zu 5 bar betreibt;

e) man eine von Arsen und Sulfat befreite Naßphosphorsäure einsetzt;

f) man der Naßphosphorsäure 0,05 bis 2,5 Gew% Aktivkohle, bezogen auf den $P_2O_5$-Gehalt, vor der Dosierung in die Mischzone, zumischt;

g) man der Naßphosphorsäure vor der Neutralisation 0,3 bis 1,5 Gew% Eisen und/oder Eisen-(II)-Salz, bezogen auf den $P_2O_5$-Gehalt, zusetzt;

h) man die Neutralisationsenthalpie für eine Wasserverdunstung aus der Mischzone nutzt;

i) man die in der Mischzone ausgefällten Niederschläge abtrennt und mit heißem Wasser wäscht;

k) man das Waschwasser in die Mischzone rückführt;

l) die gereinigte und von den Niederschlägen befreite Alkaliphosphatlösung ein $Me_2O : P_2O_5$-Verhältnis von (2,0 bis 2,2) 1 hat;

m) dis gereinigte und von Niederschlägen befreite Alkaliphosphatlösung eine $P_2O_5$-Konzentration von 15 bis 25 Gew%, insbesondere von 17 bis 22 Gew%, hat.

Mit dem erfindungsgemäßen Verfahren ist es nunmehr möglich, die Neutralisationsreinigung so zu gestalten, daß nur noch ein $P_2O_5$-Verlust von etwa 5 bis 10 Gew%, bezogen auf das mit der Rohphosphorsäure eingesetzte $P_2O_5$, eintritt.

Es hat sich gezeigt, daß die $P_2O_5$-Verluste verringert werden, wenn die Gesamtmenge der Alkalilauge in der Mischzone vorgelegt wird und anschließend die Naßphosphorsäure in hoher Verteilung in die Mischzone eingebracht wird, damit auch eine partielle Übersäuerung unterbunden wird.

Je nach der Erzqualität, die für die Herstellung der Naßphosphorsäure eingesetzt wurde, können der Naßphosphorsäure weitere Reagenzien zugesetzt werden, um die Reinheit der gereinigten Alkaliphosphatlösung zu verbessern. So kann man, wenn die gerenigte Alkaliphosphatlösung größere Aluminiumverunreinigungen enthält, der Naßphosphorsäure Silikat, besonders in Form von Wasserglas oder Kieselgur, zugeben.

Die Filtrierbarkeit des ausgefallenen Niederschlages wird durch eine Temperaturerhöhung in der Mischzone günstig beeinflußt. Ebenso vermindern sich mit einer Temperaturerhöhung die $P_2O_5$-Verluste, da durch eine Wasserbehandlung des ab getrennten Niederschlages noch der Großteil des wasserlöslichen $P_2O_5$ aus dem dann besser kristallisierten Niederschlag gewonnen werden kann. Diese Waschwässer dienen zur Verdünnung der Naßphosphorsäure vor der Zugabe in die Mischzone.

Die in die Mischzone eingeführte Naßphosphorsäure hat vorzugsweise einen $P_2O_5$-Gehalt von 25 bis 35 Gew% $P_2O_5$. Es können aber auch konzentriertere oder verdünntere Naßphosphorsäuren eingesetzt werden. Bei verdünnteren Naßphosphorsäuren muß jedoch bei der Überführung der Alkaliphosphatlösung in feste Alkaliphosphate zusätzliche Energie aufgewendet werden. Bei konzentrierterem Naßphosphorsäureeinsatz können Verarbeitungsschwierigkeiten durch auskristallisierendes Alkaliphosphat auftreten.

Bei dem erfindungsgemäßen Verfahren sind bei $P_2O_5$-Gehalten von mehr als 20 Gew% in der gereinigten Alkaliphosphatlösung Verarbeitungstemperaturen von mehr als 95° C, besser von mehr als 100° C, unbedingt einzuhalten, da es sonst zu unerwünschter Kristallbildung kommen kann. Bei der Weiterverarbeitung der gereinigten Alkaliphosphatlösung zu Natriumtripolyphosphat wird diese Lösung mittels reiner Phosphorsäure auf ein $Me_2O$ $P_2O_5$-Verhältnis von 1,67 eingestellt. Für diesen Fall wird aus der eingesetzten Naßphosphorsäure durch Zusatz von Sulfid das Arsen entfernt und der Sulfatgehalt in der Naßphosphorsäure durch Ca-Salze oder besser noch durch Ba-Salze verkleinert. Bei der Weiterverarbeitung der Alkaliphosphatlösung zu kristallisierten Alkaliphosphaten kann auf eine vorherige Arsen- und Sulfat-Abtrennung aus der Naßphosphorsäure verzichtet werden.

Beim erfindungsgemäßen Verfahren ist mit Alkalilauge sowohl Natron- als auch Kalilauge gemeint. Bei der Herstellung gereinigter Kaliphosphatlösung kann wegen der größeren Löslichkeiten der Kalisalze entweder bei einer tieferen Temperatur in der Mischzone gearbeitet werden oder es kann die $P_2O_5$-Konzentration in der Kaliphosphatlösung erhöht werden.

Das erfindungsgemäße Verfahren wird anhand des Blockschemas näher erläutert:

In der Mischzone, bestehend aus einem heizbaren Rührkessel 1 mit Rührer 2 und Entlüftung 3, wird über die Leitung 4 die gesamte Alkalilauge vorgelegt und aufgeheizt. In die gerührte Alkalilauge fließt dann die Naßphosphorsäure über die Leitung 5 mit Verteiler 6 in die Mischzone, bis in der Mischzone eine Alkaliphosphatlösung mit einem $Na_2O$ ($K_2O$) : $P_2O_5$-Verhältnis von (2,0 bis 2,2) : 1 resultiert. Die Alkaliphosphatlösung wird über Leitung 8 einer Filterpresse 9 zugeführt. Die gereinigte Alkaliphosphatlösung läuft über Leitung 10 ab. Der abfiltrierte Niederschlag wird mit heißem Wasser über Leitung 12 gewaschen. Das Waschwasser aus der Filterpresse 9 wird über die Leitung 7 mit der Naßphosphorsäure vereinigt. Der gewaschene Niederschlag fällt in die Schurre 11.

Beispiel

In einem heizbaren Rührbehälter werden 1,1 m³ 50 gew%ige Natronlauge vorgelegt und auf 80° C erwärmt. 3,6 m³ vorgereinigte Naßphosphorsäure (29,8 % $P_2O_5$, 0,2 % $SO_4$ 0,35 % Fe, 0,6 % Mg, 0,04 % Ca) werden mit 0,9 m³ Waschwasser (aus der Filterpresse) verdünnt. Das Waschwasser enthält 4,5 % $P_2O_5$. Unter kräftigem Rühren fließt die verdünnte Phosphorsäure, auf 4 Auslaufstellen verteilt, innerhalb von 10 min in die Natronlauge ein. Die Temperatur der Maische steigt dabei auf 115 bis 120° C an. Nach Beendigung der Naßphosphorsäurezugabe wird die erhaltene Maische noch weitere 5 min gerührt und dann über eine Filterpresse filtriert. Der hierbei abgetrennte Filterkuchen wird mit 0,9 m³ Wasser gewaschen. Er enthält noch 5,9 % des gesamten $P_2O_5$, das in die Maische eingebracht wird. Als Filtrat werden 4,6 m³ Dinatriumphosphatsalzlösung mit einem $P_2O_5$-Gehalt von 20,4 % und einem $Na_2O$ : $P_2O_5$-Verhältnis von 2,1 : 1 erhalten. Das angefallene Waschwasser wird zur Verdünnung weiterer zu reinigender Naßphosphorsäure rückgeführt.

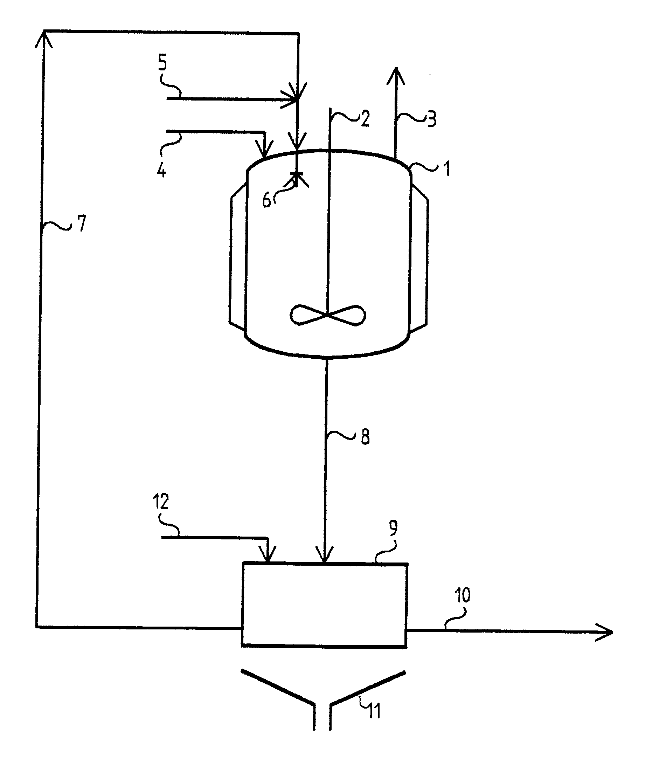

**Ansprüche**

1. Verfahren zur Herstellung gereinigter Alkaliphosphatlösung aus Naßphosphorsäure, dadurch gekennzeichnet, daß man die Naßphosphorsäure bei erhöhter Temperatur in eine mit Alkalilauge beaufschlagte Mischzone dosiert und in dieser Mischzone stets ein $Me_2O$ : $P_2O_5$-Verhältnis von größer als 1,9 : 1 einhält.

2. Verfahren nach Anspruch 1, dadurch gekennzeichnet, daß die Temperatur in der Mischzone 600 bis 130° C, insbesondere 95 bis 105° C, beträgt.

3. Verfahren nach einem der Ansprüche 1 und 2, dadurch gekennzeichnet, daß man die Mischzone vor dem Naßphosphorsäurezusatz auf 600 bis 130° C vorheizt.

4. Verfahren nach einem der Ansprüche 1 bis 3, dadurch gekennzeichnet, daß man als Alkalilauge eine 40 bis 50 %ige Natronlauge einsetzt.

5. Verfahren nach einem der Ansprüche 1 bis 4, dadurch gekennzeichnet, daß man die Mischzone unter einem Überdruck von bis zu 5 bar betreibt.

6. Verfahren nach einem der Ansprüche 1 bis 5, dadurch gekennzeichnet, daß man eine von Arsen und Sulfat befreite Naßphosphorsäure einsetzt.

7. Verfahren nach einem der Ansprüche 1 bis 6, dadurch gekennzeichnet, daß man der Naßphosphorsäure 0,05 bis 2,5 Gew% Aktivkohle, bezogen auf den $P_2O_5$-Gehalt, vor der Dosierung in die Mischzone zumischt.

8. Verfahren nach einem der Ansprüche 1 bis 7, dadurch gekennzeichnet, daß man der Naßphosphorsäure vor der Neutralisation 0,3 bis 1,5 Gew% Eisen und/oder Eisen (II)-Salz, bezogen auf den $P_2O_5$-Gehalt, zusetzt.

9. Verfahren nach einem der Ansprüche 1 bis 8, dadurch gekennzeichnet, daß man die Neutralisationsenthalpie für eine Wasserverdunstung aus der Mischzone nutzt.

10. Verfahren nach einem der Ansprüche 1 bis 9, dadurch gekennzeichnet, daß man die in der Mischzone ausgefällten Niederschläge abtrennt und mit heißem Wasser wäscht.

11. Verfahren nach einem der Ansprüche 1 bis 10, dadurch gekennzeichnet, daß man das Waschwasser in die Mischzone rückführt.

12. Verfahren nach einem der Ansprüche 1 bis 11, dadurch gekennzeichnet, daß die gereinigte und von den Niederschlägen befreite Alkaliphosphatlösung ein $Me_2O : P_2O_5$-Verhältnis von (2,0 bis 2,2) : 1 hat.

13. Verfahren nach einem der Ansprüche 1 bis 12, dadurch gekennzeichnet, daß die gereinigte und von Niederschlägen befreite Alkaliphosphatlösung eine $P_2O_5$-Konzentration von 15 bis 25 Gew%, insbesondere von 17 bis 22 Gew%, hat.